# EUROPEAN PATENT SPECIFICATION

(11) **EP 3 089 585 B1**
(45) Date of publication and mention of the grant of the patent: **26.12.2018**
(21) Application number: 14824017.9
(22) Date of filing: 29.12.2014
(51) Int. Cl.: A01N 25/04, A01N 57/20, A01N 37/40, A01N 39/04, A01N 43/54, A01N 43/70, A01N 47/04, A01N 47/30, A01N 51/00, C05B 7/00, C05C 3/00, C05G 3/04, A01P 7/00, A01P 13/00, C05G 3/02, C05G 3/00

(54) **CONCENTRATED SUSPENSION OF AGROCHEMICALS IN HIGH ELECTROLYTE AQUEOUS MEDIUM**
KONZENTRIERTE SUSPENSION AUS AGROCHEMIKALIEN IN WÄSSRIGEM MEDIUM MIT HOHEM ELEKTROLYTGEHALT
SUSPENSION CONCENTRÉE DE PRODUITS AGROCHIMIQUES DANS UN MILIEU AQUEUX D'ÉLECTROLYTE ÉLEVÉ

(30) Priority: 31.12.2013 US 201361922167 P; 11.04.2014 EP 14164332
(43) Date of publication of application: 09.11.2016
(73) Proprietor: Akzo Nobel Chemicals International B.V., 6824 BM Arnhem (NL)
(72) Inventor: ZHU, Shawn, Stormville, New York 12582 (US)
(74) Representative: Akzo Nobel Chemicals IP Group
(86) International application number: PCT/EP2014/079355
(87) International publication number: WO 2015/101590

(56) References cited:
- EP-A1- 0 268 574
- EP-A2- 0 413 274
- WO-A2-2007/096885
- WO-A2-2012/123094
- JP-A- 2002 087 911
- US-A- 5 837 864
- US-A- 5 898 072
- US-A1- 2007 066 486
- US-A1- 2010 197 739
- US-A1- 2010 234 225
- US-A1- 2011 105 328
- US-B1- 6 417 140
- US-B1- 6 849 577

## Description

### Field of the Invention

The present invention generally relates to an aqueous suspension composition displays shear thinning property comprising i) at least one water soluble salt selected from fertilizers, pesticide salts, and combinations thereof, ii) at least one electrolyte water thickening polymer selected from the group consisting of guar gum, its derivatives and mixtures thereof, iii) at least one water insoluble solid agrochemical selected from the group consisting of methylethyl hydroxyethyl cellulose, a pesticide, a growth regulator, a micronutrient and combinations and mixtures thereof.

### Background of the Invention

Many solid agrochemicals, including herbicides such as atrazine and drift control agents such as cellulosic derived polymer, are in powder form. Handling chemicals in powder form increases potential health issues due to potential inhalation dangers. To minimize this potential danger, solid agrochemicals are often dispersed in water, especially if the solid agrochemical is insoluble or has low solubility in water. This type of stable formulation is commonly referred to as a suspension concentrate (SC) in agriculture applications where the powdered solid is suspended in an aqueous medium.

In SC's, if the density of the solid is higher (or lower) than the aqueous medium, additives are typically utilized to suspend the solid particles and to thicken the aqueous medium to minimize sediment (or flotation).

Suspension of proppant such as sand particles suspended in a thickened electrolyte aqueous medium is well known in oilfield applications. Unlike agrochemical formulations, proppant suspensions for oilfield use typically doesn't require long term stability and the proppant serves as permanent particles even after application. Currently, there are very few known agrochemical formulations containing a solid agrochemical suspended in a high electrolyte aqueous medium. The main reason for this is that it is difficult to control the interaction between the suspended agrochemicals and the electrolyte medium. In fact, most solid agrochemicals are not suitable for a SC formulation in a high electrolyte aqueous medium.

It is a common practice for a farmer or other end-user to add ammonium sulphate (AMS) fertilizer into a glyphosate herbicide tank with additional pesticide. The additional pesticide may be a solid pesticide such as atrazine. Adding various agrochemicals by the tank side is prone to error because end-users sometimes make mistakes in combining chemicals. Therefore, a pre-formulated agrochemical formulation with multiple ingredients not only can provide convenience but also can reduce human error while mixing the chemicals. Therefore, there is a need for a stable suspension concentrate (SC) containing a solid agro chemical suspended in high electrolyte aqueous medium.

Solid agrochemicals differ significantly from typical proppants used in oil field industry as these agrochemicals perform specific biological functions, directly or indirectly, after the formulations are applied. The solid agrochemicals include, but not limited to, pesticides, growth regulators, water-insoluble micronutrients, deposition aids, drift control agents, and the like and/or combinations or mixtures of same. They generally have very limited solubility in the aqueous electrolyte medium before application, i.e., they have very limited interaction with the electrolyte medium before application.

Polymeric cellulosic derivatives are one particular useful class of solid agrochemicals. They have the property of being able to remain as a solid particle in high electrolyte environment until it is diluted to water. Strictly speaking, the polymer cellulosic derivatives utilized in the present invention are water-soluble polymers (WSP) because they eventually hydrate in water with low electrolyte content. Cellulosic derivatives are typically dispersed into water before use. It is well known that evenly dispersing a WSP into water sometimes is a difficult task. When added to water, WSP particles can hydrate in water and form a protective gelled "skin", preventing the interior of the particle from further hydration. Because of this gelled "skin", aqueous systems of WSP may contain many gel spots, sometime called "fish eyes", which can be very difficult to disperse.

To avoid potential "fish eye" issues, various techniques have been developed. One such well-known technique employs a process that mixes the WSP powder in a liquid glycol before adding it to water. Since the WSP doesn't hydrate or doesn't hydrate too quickly in glycol, the glycol can separate the powder particles evenly before adding to water. While this technique can minimize the fish eyes problem, it does require a glycol, which is expensive and does not contribute to the other desired properties of the formulation. In addition, many WSPs may eventually hydrate and gel in glycol.

Another technique described in U.S. Patent No. 6,639,066 utilizes a suspension composition comprising a solid nonionic cellulosic ether, a salt of polyphosphate, and another salt selected from the group consisting of ortophosphate, pyrophosphate, and sulphate. Since water activity in such a high electrolyte system is greatly reduced due to the hydration from the electrolytes, the left over water molecules are not able to completely hydrate the nonionic cellulosic ether. Hence, the nonionic cellulosic ether powder can be dispersed evenly in high electrolyte aqueous solution. Subsequent addition of such nonionic cellulosic ether dispersion into water can minimize the fish eyes problem. However, the stability data in this patent was for 1 week old suspensions only and there is no mention of stability longer than 1 week. Additionally, this technique is not effective in cases when the nonionic cellulosic ether dispersion, i.e., more correctly suspension, needs to be stored for a substantial length of time before addition to water.

U.S. Patent Nos. 5,837,864 and 5,898,072 disclose suspensions having a cross-linked cellulose ether. U.S. Patent application number 12/845,861 discloses a suspension that is not an electrolyte solution. U.S. Patent application number 11/476,655 discloses a suspension having multiple anionic surfactants. EP0268574 discloses a suspension having nonylphenol ethoxylates. EP0413274 discloses a suspension requiring a wetting agent.
US 2006/166898 discloses formulations comprising: a water insoluble pesticide, a metal lignin sulfonate salt, and a water soluble salt of a strong acid displaying shear thinning property. The use of guar gums is not disclosed or suggested, while it is demonstrated that a xanthan gum alone connot be used to obtain the shear-thinning formulations.

### Summary of Invention

The present invention generally relates to an aqueous suspension composition displays shear thinning property comprising i) at least one water soluble salt selected from fertilizers, pesticide salts, and combinations thereof, ii) at least one electrolyte water thickening polymer selected from guar gum, its derivatives and mixtures thereof, iii) at least one water insoluble solid agrochemical selected from the group consisting of methylethyl hydroxyethyl cellulose, a pesticide, a growth regulator, a micronutrient and combinations and mixtures thereof.

The electrolyte water thickening polymer is a water soluble polymer capable of fully hydrating and thickening the salt solution. In one embodiment, the electrolyte water thickening polymer is a polysaccharide thickener comprising guar gum. References to guar gum herein include nonionic guar gum (including hydroxyl propyl guar gum), cationic guar gum (including quaternary guar gum), anionic guar gum, amphoteric guar gum, and/or combinations and mixtures thereof.

The invention also relates to a method of preparing said aqueous liquid suspension comprising a step of dispersing a solid water insoluble agrochemical into a shear thinning aqueous electrolyte solution thickened by an electrolyte water thickening guar polymer as defined in claims. The thickened electrolyte solution is shear thinning so that at rest the solid particles can be suspended by the high viscosity provided by the electrolyte water thickening polymer and while pouring the viscosity drops to allow easy flow of the product. When the dispersed solid is a methylethyl hydroxyethyl cellulose, the concentration of the electrolyte is required to be high enough to supress the hydration of the dispersed solid methylethyl hydroxyethyl cellulose but not too high to affect the thickening ability of the electrolyte thickening guar polymer.

### Detailed Description of Invention

The present invention provides an aqueous suspension composition displaying shear thinning property and having a viscosity of less than 30000 mPa*s at 25°C as measured by a Brookfield viscometer DV-II Pro with a spindle #64 at 60 RPM, said suspension comprising: i) at least one water soluble salt selected from: water soluble fertilizers, water soluble pesticide salts, and combinations thereof, and having at least 20% solubility at 25°C in water, ii) at least one electrolyte water thickening polymer capable of thickening the composition selected from the group consisting of guar gum, hydroxyl propyl guar gum, quaternary guar gum, anionic guar gum, amphoteric guar gum, and mixtures thereof, iii) at least one water insoluble solid agrochemical having less than 2 wt% solubility in water at 25°C selected from the group consisting of: methylethyl hydroxyethyl cellulose, a pesticide a growth regulator, a micronutrient and combinations and mixtures thereof, and the remainder water, wherein the concentration of the water soluble salt is from 15 to 70 wt%, the concentration of the electrolyte water thickening polymer is from 0.1 to 2 wt%, the concentration of the solid agrochemical is from 3 to 50 wt%, balanced with water to 100 wt%.

The concentration of the electrolyte water thickening polymer in the composition of the present invention is from 0.1 to 2 wt%, in another embodiment from 0.3 to 1 wt%.

Generally, use of more than about 1.5 wt% guar gum in the water soluble suspensions is not necessary unless a very thick or gelled product is desired. Guar gum has the ability to prevent the lateral flogging while at the same time modifying the density of the electrolyte solution to minimize settling.

The water soluble salts, i.e., the electrolyte, useful in the context of the present invention are ionic compounds that can dissolve and dissociate easily into cations and anions in water. Non-limiting examples of cations are ammonium, lithium, sodium, calcium, magnesium, aluminium, copper, isopropylamine, dimethylamine, monoethanolamine, diethyleneamine, diethanolamine, triethanolamine, paraquat herbicide, and mixture of them. Non-limiting examples of anions are sulphate, sulphite, chloride, nitrate, bromide, fluoride, carbonate, bicarbonate, phosphate, biphosphate, glyphosate herbicide anion, 2,4-D herbicide anion, MCPA herbicide anion, dicamba herbicide anion, glufosinate herbicide anion, and mixtures of them. In one embodiment, the ionic compounds are salts of glyphosate, salts of 2,4-D, salts of dicamba, salts of glufosinate, ammonium sulphate, calcium chloride, sodium chloride, magnesium chloride, sodium bromide, sodium sulphate, ammonium bicarbonate, ammonium carbonate, sodium carbonate, ammonium nitrate, and mixture of them. The concentration of the ionic compounds is from 15 to 65 wt%, in another embodiment from 15 to 50 wt%, in yet another embodiment from 15 to 40 wt%, and in still another embodiment from 20 to 30 wt%.

The particular electrolyte to be used can be highly system specific, and is influenced by the specific components of the composition. Some systems only function well if a particular ionic compound is included in the composition, and will not function properly if other ionic compounds are substituted.

In one embodiment, the water insoluble solid agrochemical to be suspended is methylethyl hydroxyethyl cellulose. The concentration of methylethyl hydroxyethyl cellulose is from 3 to 40 wt%, in another embodiment from 5 to 35 wt%, in yet another embodiment from 10 to 30 wt%, and in still another embodiment from 15 - 25 wt%.

A methyl ethyl hydroxyl ethyl cellulose derivative (MEHEC) is disclosed in U.S. Patent No. 6,639,066 and WO 2012/80301 A2. The insolubility of MEHEC in the context of the present invention refers to the lack of thickening of the aqueous medium after adding MEHEC. This can be measured by comparing the viscosities of an electrolyte system without MEHEC and with intended amount of MEHEC. If the viscosity of the electrolyte system with MEHEC is similar to the viscosity without MEHEC, MEHEC is considered insoluble in the electrolyte system. In this case, MEHEC remains non-hydrated and MEHEC particles still have defined shape which can be observed under an optical microscope. In circumstances where the electrolyte concentration is above about 15%, the MEHEC generally is water insoluble because the electrolyte concentration is high enough to suppress its hydration, rendering it insoluble.

Cellulosic derivatives such as MEHEC are agrochemicals that reduce the amount of fine droplets of agricultural formulations, which helps control drift of the agricultural formulations. MEHEC's usefulness as an agrochemical is illustrated, for example, at Example 10 below.

In another embodiment, the water insoluble solid agrochemical to be suspended is a water insoluble solid pesticide or a growth inhibitor. The concentration of the pesticide or growth inhibitor is from 5 to 50 wt%, in another embodiment from 5 to 35 wt%, in another embodiment from 10 to 30 wt%, and in yet another embodiment from 15 to 25 wt%. Examples of water insoluble pesticides usefully employed in the context of the present invention include, but are not limited to atrazine herbicide, diuron herbicide, captan fungicide, clothianidin insecticide, neonicotinoids insecticide such as imidacloprid, azoxystrobin fungicide, and the like.

The product of the present invention is storage stable and has no significant separation, no lumps and no significant increase in viscosity after long term storage tests (> 4 weeks) at a temperature < 50°C. The product can be re-mixed easily, even if some settling does occur, and can be re-dispersed into water easily.

Water soluble salts in the specification are pesticide salts and fertilizers that have at least 20% solubility at 25°C in water, in another embodiment at least 40% solubility at 25°C in water.

Water insoluble pesticides in the specification have less than 2 wt%, preferably less than 1 wt%, and more preferably less than 0.1 wt% solubility at 25°C in water.

Other minor and/or optional components can be added to the compositions of the present invention. These components include, but are not limited to surfactants, antimicrobials and the like. However, due to the high electrolyte content in the suspension, use of antimicrobials may not be necessary.

The invention also relates to a method of producing a storage stable (< ∼40°C) aqueous solid suspension of an agrochemical in a thickened electrolyte medium having shear thinning property and viscosity less than 30000 mPa*s, as measured at about 25°C with a Brookfield viscometer DV-II Pro with a spindle #64 at 60 RPM, and wherein the concentration of the water soluble salt is from 15 to 70 wt%, the concentration of the electrolyte water thickening polymer is from 0.1 to 2 wt%, the concentration of the solid agrochemical is from 3 to 50 wt%, balanced with water to 100 wt%, said method comprising:
mixing of at least one electrolyte water thickening polymer selected from the group consisting of guar gum, hydroxyl propyl guar gum, quaternary guar gum, anionic guar gum, amphoteric guar gum and mixtures thereof into water in a vessel until the electrolyte water thickening polymer is fully hydrated or until the viscosity has been developed in order to obtain a premix, mixing of at least one water soluble salt having at least 20% solubility at 25°C in water with the premix, and further followed by mixing of at least one water insoluble solid agrochemical having less than 2 wt% solubility at 25°C selected from the group consisting of methylethyl hydroxyethyl cellulose, a pesticide, a growth regulator, a micronutrient and combinations and mixtures thereof into said premix until a homogeneous suspension composition is obtained.

The invention also relates to another method of producing a storage stable (< ∼40°C) aqueous solid suspension of an agrochemical in a thickened electrolyte medium having shear thinning property and viscosity less than 30000 mPa*s, as measured at about 25°C with a Brookfield viscometer DV-II Pro with a spindle #64 at 60 RPM, and wherein the concentration of the water soluble salt is from 15 to 70 wt%, the concentration of the electrolyte water thickening polymer is from 0.1 to 2 wt%, the concentration of the solid agrochemical is from 3 to 50 wt%, balanced with water to 100 wt%, said method comprising:
(i) first adding and dissolving at least one water soluble inorganic salt selected from water soluble fertilizers, water soluble pesticide salts, and combinations thereof, and having at least 20% solubility at 25°C in water in water in a vessel,
(ii) next adding and mixing at least one electrolyte water thickening polymer selected from guar gum, hydroxyl propyl guar gum, quaternary guar gum, anionic guar gum, amphoteric guar gum, and mixtures thereof in the vessel until the electrolyte water thickening polymer is fully hydrated or until the viscosity has been developed,
(iii) next mixing at least one water insoluble solid agrochemical having less than 2 wt% solubility at 25°C in water and selected from the group consisting of methylethyl hydroxyethyl cellulose, a pesticide, a growth regulator, a micronutrient and combinations and mixtures thereof into the vessel until a homogeneous suspension composition is obtained.

The invention will further be illustrated by the following non-limiting examples. Viscosity measurement of all samples was performed with a Brookfield viscometer DV-II+ Pro using a #64 spindle at room temperature.

### Example 1

21.38 grams ammonium sulphate (AMS) were added into 52.87 grams water with agitation until AMS fully dissolved. 0.75 grams AGRHO® DR-2000 (hydroxyl propyl guar gum from Rhodia) was then added into this AMS solution, which was mixed until guar gum fully hydrated and the mixture reached a stable viscosity. 25 grams of MEHEC was then added under vigorous mixing until the composition was lump-free (a smooth suspension). The viscosity of this MEHEC suspension is shown in Table 1.

**Table 1. Viscosity of 25% MEHEC suspension in example 1 after 5 days at ∼20°C.**

| RPM | Viscosity, cps (mPa*s) |
|---|---|
| 1.5 | 17200 |
| 3 | 11400 |
| 12 | 6800 |
| 30 | 4200 |
| 60 | 2800 |

The sample shows a strong shear thinning property. This sample does not freeze at ∼0°C and it still flows quite easily at this temperature. It becomes viscous at ∼ -10°C. The viscosity of the sample did not substantially change after 3 freeze-thaw cycles (-30°C/room temperature). The sample had a clear phase at bottom (-10% in volume) after 4 weeks placed in a 50°C oven. The top phase was still uniform. The sample could be re-mixed easily into a uniform sample and remained with little separation below room temperature.

### Example 2 (comparative)

10 - 30% AGRHO DR-2000 in 20 - 40% AMS forms a gel (non-flowable). This illustrates that guar gum cannot be used to suspend itself.

### Example 3 (reference)

0.7 grams TIC Pretested® Ticaxan® Xanthan Powder (Xanthan gum) was added to 99.3 grams water under vigorous mixing. The xanthan gum was able to fully hydrate into a viscous solution. 30 grams of AMS added to this xanthan gum solution did not de-hydrate the xanthan gum, i.e., the xanthan gum did not coagulate together into lumps and did not squeeze out the water. The viscosity of this xanthan gum solution remained relatively unchanged. This xanthan gum solution is useful to suspend water insoluble solid agrochemicals.

### Example 4 (reference)

30 grams of AMS was added to 99.3 grams water with mixing until the AMS dissolved. 0.7 gram TIC Pretested® Ticaxan® Xanthan Powder (Xanthan gum) was then added. Example 4 has the same composition as Example 3, but was created with a different process. The xanthan gum of this example did not fully hydrate xanthan gum particles. The suspension medium prepared as described in this example is not preferred to suspend water insoluble solid agrochemicals.

Comparing example 3 and 4, it can be seen that preferably xanthan gum needs to hydrate in water prior to adding electrolytes.

### Example 5 (reference)

2.6 grams TIC Pretested® Ticaxan® Xanthan Powder (Xanthan gum) was added to 537.4 grams water with mixing until xanthan gum fully hydrated to a uniform solution. 210 grams AMS was then added to this solution with stirring until AMS fully dissolved. 250 grams MEHEC was added under vigorous mixing using an overhead stirrer until a lump-free, smooth suspension was obtained. Total sample size was 1000 g. This sample flowed smoothly. The viscosity of this MEHEC suspension is shown in Table 2.

**Table 2. Viscosity of 25% MEHEC suspension in example 5**

| RPM | Viscosity (day 1), cps (mPa*s) |
|---|---|
| 1.5 | 34000 |
| 3 | 23000 |
| 6 | 15000 |
| 12 | 9200 |
| 30 | 4600 |
| 60 | 2900 |

This sample was divided into four parts. Part 1 was stored at 50°C. Part 2 was kept on the lab bench at room temperature (∼ 22°C). Part 3 was stored at low temperature (0 ∼ -5°C). Part 4 was used for a freeze/thaw (F/T) study. The storage stability of this sample is shown in Table 3.

**Table 3. Storage stability of Example 5.**

| | 50°C | ∼22°C | 0 ∼ -5°C |
|---|---|---|---|
| 5 days | No separation, no coagulation, sample uniform. | No separation, no coagulation, sample uniform. | No separation, no coagulation, sample uniform. |
| 7 days | ∼ 1% top clear. No coagulation, sample uniform. Then sample is moved to room temp. | No separation, no coagulation, sample uniform. | No separation, no coagulation, sample uniform. |
| 28 days | ∼ 5% top clear. No coagulation, flow easily, sample uniform. Re-mix easily. Viscosity (60 RPM) = 550 cps. (mPa*s) | ∼1% top clear. No coagulation, flow easily, sample uniform. Re-mix easily Viscosity (60 RPM) = 400 cps. (mPa*s) | No separation. No coagulation. Viscous but flowable at 0C. Flow easily after it returns to room temp. Sample uniform. |

The sample is freeze/thaw stable after 3 cycles of F/T.

Example 5 demonstrate that the MEHEC suspension is very easy to handle and is stable below room temperature and relatively stable at 50° C, even with a relatively low viscosity. The loss of viscosity may have been due to bacterial growth in the sample since no antimicrobial was added.

### Example 6

0.8 gram Jaguar® C-14S (cationic guar from Rhodia) was added to 99.2 gram water with mixing. -0.07 gram 40% citric acid aqueous solution was added to thicken the system. 38.9 grams AMS was then added with mixing. The viscosity decreased somewhat compared to Example 1, but the viscosity was sufficient to suspend water insoluble solid agrochemicals. The system is shear thinning. 75 grams of this sample was added to 25 grams MEHEC and this mixture was homogenized until the sample was uniform. This sample was stored at 50°C for 7 days with no visible separation that occured. The sample is very viscous at room temperature because of the high concentration of Jaguar® C-14S.

### Example 7

0.53 gram Jaguar® C-14S (cationic guar from Rhodia) was added to 100.29 grams water with mixing. -0.08 gram 40% citric aqueous solution was then added to thicken the system. 38.94 grams of AMS was then added with mixing. The system is shear thinning. Finally 46.61 grams MEHEC was added and the suspension was homogenized until the sample was uniform. This sample contained 0.284% Jaguar C-14S, 53.80% water, 0.043% 40% citric acid, 20.885% AMS, and 25.00% MEHEC. The sample had good flowability. The viscosity at 22.5°C is shown in Table 4. This sampled was stored at 50°C for 3 days, with relatively no change to viscosity or visible separation.

**Table 4. Viscosity of freshly prepared sample in example 7**

| RPM | Viscosity, cps (mPa*s) |
|---|---|
| 1.5 | 13000 |
| 60 | 1300 |

### Example 8

0.7 g Jaguar C-14S was added to 27.47 g water with mixing. 76 g K-glyphosate (62% active ingredient) was then added with mixing until the viscosity was developed into a stable value (< 30 minutes). 9.8 g of atrazine (a powder herbicide) was then added and the suspension was mixed until uniform. This sample exhibited good viscosity and stability with < 5% separation at room temperature and < -10% separation at 50°C for 1 month. This sample still flowed easily without lumps.

### Example 9

10 g water was mixed with 10 g 10-34-0 fertilizer (a clear ammonium poly-phosphate solution with 10% N and 34% P₂O₅). 0.2 g AGRHO DR-2000 was added and mixed well. A thickened solution with good viscosity was obtained. 2.24 g imidacloprid insecticide powder was added and mixed well. A stable and flowable imidacloprid suspension was obtained.

Adding a small amount (e.g. about 1 to 2 percent) of a wetting agent Witconate NAS-8 (sodium octane sulfonate) helps to disperse imidacloprid powder in the system.

### Example 10

A composition containing 38.73 wt% IPA-glyphosate (-62% ai), 45.47 wt% K-glyphosate (-46% ae), 10 wt% tallow/cocoamine ethoxylate, 0.8 wt% AGRHO DR-2000, and 5% MEHEC was created in a bottle. Guar gum DR-2000 and MEHEC were blended together separately and added to the composition after the remaining components were mixed together. The composition was mixed using an overhead stirrer for 30 minutes. This composition was stable (no sign of separation at room temperature for 3 months). Drift measurement were performed of 0.5%, 1% and 2% of this sample in water under spray pressures of 207 kPa (30 PSI), 276 kPa (40 PSI), and 414 kPa (60 PSI) using a flat fan nozzle. Drift measurement on a formulation without MEHEC drift control agent and guar gum DR-2000 were also performed. The data is shown in the Table 5.

**Table 5. Reduction of Fine Droplets Due To Agrochemical MEHEC**

| | Spray Pressure, psi 1 psi = 6.9 kPa | % reduction of fine droplets (<150 µm) compared to the sample without MEHEC and DR-2000 | % fine droplets in < 150 µm | |
|---|---|---|---|---|
| 0.5% sample | 30 | 31 | 31 | |
| 1% sample | 30 | 50 | 24 | |
| 2% sample | 30 | 73 | 13 | |
| 0.5% sample | 40 | 27 | 40 | |
| 1% sample | 40 | 44 | 32 | |
| 2% sample | 40 | 65 | 21 | |
| 0.5% sample | 60 | 19 | 50 | |
| 1% sample | 60 | 35 | 40 | |
| 2% sample | 60 | 62 | 26 | |

The data shows that the agrochemical MEHEC acts as a drift control agent to reduce the amount of fine droplets (<150 µm) by 19% to 73% depending on the dilution concentration and spray pressure.

### Example 11

The effect of guar gum on the stability of a clothianidin fertilizer SC was analyzed. Two samples are shown in table 6 below. In sample A, URAN 28 fertilizer was combined with DR-2000 guar gum and clothianidin insecticide in the amounts described in Table 6. In Sample B, URAN 32 fertilizer (∼ 80% solid with ∼45% ammonia nitrogen and -34.8% urea in ∼20% water) was combined with DR-2000 guar gum, wetting agent Witcolate D-510 (2-ethylhexyl sulfate), and citric acid.

**Table 6: Clothianidin SC in URAN fertilizer**

| Sample | A | B |
|---|---|---|
| URAN 28 | 59.54 (wt%) | |
| URAN 32 | | 58.51 (wt%) |
| Witcolate D-510 | | 1.33 (wt%) |
| AG-RHO DR-2000 | 0.3 (wt%) | 0.3 (wt%) |
| Citric acid (40%) | | 0.4 (wt%) |
| Clothianidin | 40.16 (wt%) | 39.46 (wt%) |
| Mixing method | Homogenized | Hand shake |
| Comment | Room temp 1 month ∼15% top clear | Room temp 2 month < 10% top clear |

The data shows that samples A and B containing 0.3 wt% guar gum DR-2000 were stable at room temperature after 1 month and 2 months, respectively.

As exemplified above, the compositions of the present disclosure provide a useful suspension concentrate for use with insoluble solid agrochemicals. Beneficially, the compositions of the present disclosure provide suspension concentrates without the need for surfactants to be included in the composition. In particular, the use of nonylphenyl derivatives can be avoided, which reduces the potential toxicity of the composition. Other surfactants such as TSP phosphate esters can also be avoided, and are not necessary for the compositions of the present disclosure.

## Claims

1. An aqueous suspension composition comprising i) at least one water soluble salt selected from water soluble fertilizers, water soluble pesticide salts, and combinations thereof, and having at least 20% solubility at 25°C in water, ii) at least one electrolyte water thickening polymer capable of thickening the composition selected from the group consisting of guar gum, hydroxyl propyl guar gum, quaternary guar gum, anionic guar gum, amphoteric guar gum, and mixtures thereof, iii) at least one solid agrochemical selected from the group consisting of methylethyl hydroxyethyl cellulose, a water insoluble pesticide having less than 2 wt% solubility at 25°C in water, a water insoluble growth regulator having less than 2 wt% solubility at 25°C in water, a water insoluble micronutrient having less than 2 wt% solubility at 25°C in water, and combinations and mixtures thereof, and the remainder water, wherein the composition displays shear thinning property and has a viscosity of less than 30000 mPa*s at 25°C as measured by a Brookfield viscometer DV-II Pro with a spindle #64 at 60 RPM, and wherein the concentration of the water soluble salt is from 15 to 70 wt%, the concentration of the electrolyte water thickening polymer is from 0.1 to 2 wt%, the concentration of the solid agrochemical is from 3 to 50 wt%, balanced with water to 100 wt%.

2. The composition of claim 1 wherein the solid agrochemical is an herbicide.

3. The composition of claim 2 wherein the solid agrochemical is atrazine.

4. The composition of any one of claims 1 or 2 wherein the solid agrochemical is an insecticide.

5. The composition of claim 4 wherein the solid agrochemical is clothianidin.

6. The composition of claim 4 wherein the solid agrochemical is imidacloprid.

7. The composition of claim 1 wherein the water soluble pesticide salt is glyphosate salt, dicamba salt, 2,4-D salt, MCPA salt, glufosinate salt, and/or a mixtures or combinations thereof.

8. The composition of any one of claims 1-7, wherein the water thickening polymer is hydroxyl propyl guar gum or a quaternary guar gum.

9. A method of preparing an aqueous liquid suspension composition comprising mixing at least one electrolyte water thickening polymer in water selected from the group consisting of guar gum, hydroxyl propyl guar gum, quaternary guar gum, anionic guar gum, amphoteric guar gum and mixtures thereof in a vessel until the electrolyte water thickening polymer is fully hydrated or until the viscosity has been developed in order to obtain a premix, mixing at least one water soluble salt having at least 20% solubility at 25°C in water with the premix, and further followed by mixing at least one solid agrochemical selected from the group consisting of methylethyl hydroxyethyl cellulose, a water insoluble pesticide having less than 2 wt% solubility at 25°C in water, a water insoluble growth regulator having less than 2 wt% solubility at 25°C in water, a water insoluble micronutrient having less than 2 wt% solubility at 25°C in water, and combinations and mixtures thereof into said premix until a homogeneous suspension composition is obtained; wherein the suspension composition displays shear thinning property with a viscosity less than 30000 mPa*s, as measured at about 25°C with a Brookfield viscometer DV-II Pro with a spindle #64 at 60 RPM, and wherein the concentration of the water soluble salt is from 15 to 70 wt%, the concentration of the electrolyte water thickening polymer is from 0.1 to 2 wt%, the concentration of the solid agrochemical is from 3 to 50 wt%, balanced with water to 100 wt%.

10. The method of claim 9 wherein the water soluble salt is further combined with a water soluble pesticide salt.

11. The method of claim 10 wherein the soluble pesticide salt selected from the group consisting of a glyphosate salt, dicamba salt, 2,4-D salt, or glufosinate salt, and combinations and mixtures thereof.

12. The method of any one of claims 9 to 11 wherein the electrolyte water thickening polymer is hydroxyl propyl guar gum or a quaternary guar gum.

13. A method of preparing an aqueous liquid suspension composition comprising the steps:
(i) first adding and dissolving at least one water soluble inorganic salt selected from water soluble fertilizers, water soluble pesticide salts, and combinations thereof, and having at least 20% solubility at 25°C in water in water in a vessel,
(ii) next adding and mixing at least one electrolyte water thickening polymer selected from guar gum, hydroxyl propyl guar gum, quaternary guar gum, anionic guar gum, amphoteric guar gum, and mixtures thereof in the vessel until the electrolyte water thickening polymer is fully hydrated or until the viscosity has been developed,
(iii) next mixing at least one solid agrochemical selected from the group consisting of methylethyl hydroxyethyl cellulose, a water insoluble pesticide having less than 2 wt% solubility at 25°C in water, a water insoluble growth regulator having less than 2 wt% solubility at 25°C in water, a water insoluble micronutrient having less than 2 wt% solubility at 25°C in water, and combinations and mixtures thereof into the vessel until a homogeneous suspension composition is obtained; wherein the suspension composition displays shear thinning property with a viscosity less than 30000 mPa*s, as measured at about 25°C with a Brookfield viscometer DV-II Pro with a spindle #64 at 60 RPM, and wherein the concentration of the water soluble salt is from 15 to 70 wt%, the concentration of the electrolyte water thickening polymer is from 0.1 to 2 wt%, the concentration of the solid agrochemical is from 3 to 50 wt%, balanced with water to 100 wt%.

14. The method of claim 13 wherein the water soluble salt is further combined with a water soluble pesticide salt.

15. The method of claim 14 wherein the soluble pesticide salt is selected from the group consisting of a glyphosate salt, dicamba salt, 2,4-D salt, or glufosinate salt, and combinations and mixtures thereof.

## Patentansprüche

1. Wässrige Suspensionszusammensetzung, umfassend i) wenigstens ein wasserlösliches Salz, ausgewählt aus wasserlöslichen Düngemitteln, wasserlöslichen Pestizidsalzen und Kombinationen davon, mit wenigstens 20% Löslichkeit bei 25°C in Wasser, ii) wenigstens ein elektrolytwasserverdickendes Polymer, das die Zusammensetzung verdicken kann, ausgewählt aus der Gruppe, bestehend aus Guarkernmehl, Hydroxylpropyl Guarkernmehl, quaternärem Guarkernmehl, anionischem Guarkernmehl, amphoterem Guarkernmehl und Mischungen davon, iii) wenigstens eine feste Agrarchemikalie, ausgewählt aus der Gruppe, bestehend aus Methylethylhydroxyethylcellulose, einem wasserunlöslichen Pestizid mit weniger als 2 Gew.% Löslichkeit bei 25°C in Wasser, einem wasserunlöslichen Wachstumsregulator mit weniger als 2 Gew.% Löslichkeit bei 25°C in Wasser, einem wasserunlöslichen Mikronährstoff mit weniger als 2 Gew.% Löslichkeit bei 25°C in Wasser, und Kombinationen und Mischungen davon, und der Rest Wasser, wobei die Zusammensetzung eine strukturviskose Eigenschaft zeigt und eine Viskosität von weniger als 30000 MPa*s bei 25°C besitzt, wie durch ein Brookfield-Viskosimeter DV-II Pro mit einer #64 Spindel bei 60 U/Min. gemessen, und wobei die Konzentration des wasserlöslichen Salzes von 15 bis 70 Gew.%, die Konzentration des elektrolytwasserverdickenden Polymers von 0,1 bis 2 Gew.%, die Konzentration der festen Agrarchemikalie von 3 bis 50 Gew.%, ausgeglichen mit Wasser auf 100 Gew.%, beträgt.

2. Zusammensetzung nach Anspruch 1, wobei die feste Agrarchemikalie ein Herbizid ist.

3. Zusammensetzung nach Anspruch 2, wobei die feste Agrarchemikalie Atrazin ist.

4. Zusammensetzung nach einem der Ansprüche 1 oder 2, wobei die feste Agrarchemikalie ein Insektizid ist.

5. Zusammensetzung nach Anspruch 4, wobei die feste Agrarchemikalie Chlothianidin ist.

6. Zusammensetzung nach Anspruch 4, wobei die feste Agrarchemikalie Imidacloprid ist.

7. Zusammensetzung nach Anspruch 1, wobei das wasserlösliche Pestizidsalz Glyphosat-Salz, Dicamba-Salz, 2,4-D Salz, MCPA-Salz, Glufosinat-Salz und/oder Mischungen oder Kombinationen davon sind.

8. Zusammensetzung nach einem der Ansprüche 1-7, wobei das wasserverdickende Polymer Hydroxylpropyl-Guarkernmehl oder ein quaternäres Guarkernmehl ist.

9. Verfahren zur Herstellung einer wässrigen, flüssigen Suspensionszusammensetzung, umfassend das Mischen von wenigstens einem elektrolytwasserverdickenden Polymer in Wasser, ausgewählt aus der Gruppe, bestehend aus Guarkernmehl, Hydroxylpropyl Guarkernmehl, quaternärem Guarkernmehl, anionischem Guarkernmehl, amphoterem Guarkernmehl und Mischungen davon in einem Gefäß, bis das elektrolytwasserverdickende Polymer vollständig hydratisiert ist, oder bis die Viskosität entwickelt wurde, um eine Vormischung zu erhalten, Mischen von wenigstens einem wasserlöslichen Salz mit wenigstens 20% Löslichkeit bei 25°C in Wasser mit der Vormischung, und weiter gefolgt von dem Mischen von wenigstens einer festen Agrarchemikalie, ausgewählt aus der Gruppe, bestehend aus Methylethylhydroxyethylcellulose, einem wasserunlöslichen Pestizid mit weniger als 2 Gew.% Löslichkeit bei 25°C in Wasser, einem wasserunlöslichen Wachstumsregulator mit weniger als 2 Gew.% Löslichkeit bei 25°C in Wasser, einem wasserunlöslichen Mikronährstoff mit weniger als 2 Gew.% Löslichkeit bei 25°C in Wasser und Kombinationen und Mischungen davon in die Vormischung, bis man eine homogene Suspensionszusammensetzung erhält; wobei die Suspensionszusammensetzung eine strukturviskose Eigenschaft mit einer Viskosität von weniger als 30000 MPa*s, wie bei etwa 25°C mit einem Brookfield-Viskosimeter DV-II Pro mit einer #64 Spindel bei 60 U/Min. gemessen, zeigt, und wobei die Konzentration des wasserlöslichen Salzes von 15 bis 70 Gew.%, die Konzentration des elektrolytwasserverdickenden Polymers von 0,1 bis 2 Gew.%, die Konzentration der festen Agrarchemikalie von 3 bis 50 Gew.%, ausgeglichen mit Wasser auf 100 Gew.%, beträgt.

10. Verfahren nach Anspruch 9, wobei das wasserlösliche Salz weiterhin mit einem wasserlöslichen Pestizidsalz kombiniert ist.

11. Verfahren nach Anspruch 10, wobei das lösliche Pestizidsalz ausgewählt ist aus der Gruppe, bestehend aus einem Glyphosat-Salz, Dicamba-Salz, 2,4-D Salz oder Glufosinat-Salz und Kombinationen und Mischungen davon.

12. Verfahren nach einem der Ansprüche 9 bis 11, wobei das elektrolytwasserverdickende Polymer Hydroxylpropyl-Guarkernmehl oder ein quaternäres Guarkernmehl ist.

13. Verfahren zur Herstellung einer wässrigen, flüssigen Suspensionszusammensetzung, umfassend die folgenden Schritte:
(i) zunächst Zufügen und Auflösen von wenigstens einem wasserlöslichen, anorganischen Salz, ausgewählt aus wasserlöslichen Düngemitteln, wasserlöslichen Pestizidsalzen und Kombinationen davon, mit wenigstens 20% Löslichkeit bei 25°C in Wasser in einem Gefäß,
(ii) als Nächstes Zufügen und Mischen von wenigstens einem elektrolytwasserverdickenden Polymer, ausgewählt aus Guarkernmehl, Hydroxylpropyl Guarkernmehl, quaternärem Guarkernmehl, anionischem Guarkernmehl, amphoterem Guarkernmehl und Mischungen davon, in dem Gefäß, bis das elektrolytwasserverdickende Polymer vollständig hydratisiert ist, oder bis die Viskosität entwickelt wurde,
(iii) als Nächstes Mischen von wenigstens einer festen Agrarchemikalie, ausgewählt aus der Gruppe, bestehend aus Methylethylhydroxyethylcellulose, einem wasserunlöslichen Pestizid mit weniger als 2 Gew.% Löslichkeit bei 25°C in Wasser, einem wasserunlöslichen Wachstumsregulator mit weniger als 2 Gew.% Löslichkeit bei 25°C in Wasser, einem wasserunlöslichen Mikronährstoff mit weniger als 2 Gew.% Löslichkeit bei 25°C in Wasser, und Kombinationen und Mischungen davon, in dem Gefäß, bis man eine homogene Suspensionszusammensetzung erhält; wobei die Suspensionszusammensetzung eine strukturviskose Eigenschaft mit einer Viskosität von weniger als 30000 MPa*s, wie bei etwa 25°C mit einem Brookfield-Viskosimeter DV-II Pro mit einer #64 Spindel bei 60 U/Min. gemessen, zeigt, und wobei die Konzentration des wasserlöslichen Salzes von 15 bis 70 Gew.%, die Konzentration des elektrolytwasserverdickenden Polymers von 0,1 bis 2 Gew.%, die Konzentration der festen Agrarchemikalie von 3 bis 50 Gew.%, ausgeglichen mit Wasser auf 100 Gew.%, beträgt.

14. Verfahren nach Anspruch 13, wobei das wasserlösliche Salz weiterhin mit einem wasserlöslichen Pestizidsalz kombiniert ist.

15. Verfahren nach Anspruch 14, wobei das lösliche Pestizidsalz ausgewählt ist aus der Gruppe, bestehend aus Glyphosat-Salz, Dicamba-Salz, 2,4-D Salz oder Glufosinat-Salz und Kombinationen und Mischungen davon.

## Revendications

1. Composition de suspension aqueuse comprenant i) au moins un sel hydrosoluble choisi parmi des engrais hydrosolubles, des sels pesticides hydrosolubles et des combinaisons de ceux-ci, et ayant une solubilité d'au moins 20% à 25°C dans l'eau, ii) au moins un polymère épaississant une eau électrolytique capable d'épaissir la composition choisi dans le groupe constitué de la gomme de guar, de la gomme de guar hydroxypropylée, de la gomme de guar quaternaire, de la gomme de guar anionique, de la gomme de guar amphotère et de mélanges de celles-ci, iii) au moins un produit agrochimique solide choisi dans le groupe constitué de la méthyléthylhydroxyéthylcellulose, d'un pesticide insoluble dans l'eau ayant une solubilité inférieure à 2% en poids à 25°C dans l'eau, d'un régulateur de croissance insoluble dans l'eau ayant une solubilité inférieure à 2% en poids à 25°C dans l'eau, d'un micronutriment insoluble dans l'eau ayant une solubilité inférieure à 2% en poids à 25°C dans l'eau, et de combinaisons et de mélanges de ceux-ci, et le reste étant de l'eau, où la composition présente une propriété de fluidification par cisaillement et a une viscosité inférieure à 30000 mPa*s à 25°C telle que mesurée par un viscosimètre Brookfield DV-II Pro avec une broche #64 à 60 tr/min, et où la concentration du sel hydrosoluble est comprise entre 15 et 70% en poids, la concentration du polymère épaississant une eau électrolytique est comprise entre 0,1 et 2% en poids, la concentration du produit agrochimique solide est comprise entre 3 et 50% en poids, équilibrées avec de l'eau pour atteindre 100% en poids.

2. Composition de la revendication 1, dans laquelle le produit agrochimique solide est un herbicide.

3. Composition de la revendication 2, dans laquelle le produit agrochimique solide est l'atrazine.

4. Composition de l'une quelconque des revendications 1 et 2, dans laquelle le produit agrochimique solide est un insecticide.

5. Composition de la revendication 4, dans laquelle le produit agrochimique solide est la clothianidine.

6. Composition de la revendication 4, dans laquelle le produit agrochimique solide est l'imidaclopride.

7. Composition de la revendication 1, dans laquelle le sel pesticide hydrosoluble est un sel de glyphosate, un sel de dicamba, un sel de 2,4-D, un sel de MCPA, un sel de glufosinate et/ou des mélanges ou des combinaisons de ceux-ci.

8. Composition de l'une quelconque des revendications 1 à 7, dans laquelle le polymère épaississant l'eau est une gomme de guar hydroxypropylée ou une gomme de guar quaternaire.

9. Procédé de préparation d'une composition de suspension liquide aqueuse comprenant le mélange d'au moins un polymère épaississant une eau électrolytique dans l'eau choisi dans le groupe constitué de la gomme de guar, de la gomme de guar hydroxypropylée, de la gomme de guar quaternaire, de la gomme de guar anionique, de la gomme de guar amphotère et de mélanges de celles-ci dans un récipient jusqu'à ce que le polymère épaississant une eau électrolytique soit complètement hydraté ou jusqu'à ce que la viscosité ait été développée afin d'obtenir un prémélange, le mélange d'au moins un sel hydrosoluble ayant une solubilité d'au moins 20% à 25°C dans l'eau avec le prémélange, suivi en outre du mélange d'au moins un produit agrochimique solide choisi dans le groupe constitué de la méthyléthylhydroxyéthylcellulose, d'un pesticide insoluble dans l'eau ayant une solubilité inférieure à 2% en poids à 25°C dans l'eau, d'un régulateur de croissance insoluble dans l'eau ayant une solubilité inférieure à 2% en poids à 25°C dans l'eau, d'un micronutriment insoluble dans l'eau ayant une solubilité inférieure à 2% en poids à 25°C dans l'eau, et de combinaisons et de mélanges de ceux-ci dans ledit prémélange jusqu'à l'obtention d'une composition de suspension homogène ; où la composition de suspension présente une propriété de fluidification par cisaillement avec une viscosité inférieure à 30000 mPa*s, telle que mesurée à environ 25°C avec un viscosimètre Brookfield DV-II Pro avec une broche #64 à 60 tr/min, et où la concentration du sel hydrosoluble est comprise entre 15 et 70% en poids, la concentration du polymère épaississant une eau électrolytique est comprise entre 0,1 et 2% en poids, la concentration du produit agrochimique solide est comprise entre 3 et 50% en poids, équilibrées avec de l'eau pour atteindre 100% en poids.

10. Procédé de la revendication 9, dans lequel le sel hydrosoluble est en outre combiné avec un sel de pesticide hydrosoluble.

11. Procédé de la revendication 10, dans lequel le sel de pesticide soluble est choisi dans le groupe constitué d'un sel de glyphosate, d'un sel de dicamba, d'un sel de 2,4-D ou d'un sel de glufosinate, et de combinaisons et de mélanges de ceux-ci.

12. Procédé de l'une quelconque des revendications 9 à 11, dans lequel le polymère épaississant une eau électrolytique est une gomme de guar hydroxypropylée ou une gomme de guar quaternaire.

13. Procédé de préparation d'une composition de suspension liquide aqueuse comprenant les étapes qui consistent :
(i) à ajouter et dissoudre dans l'eau d'abord au moins un sel inorganique hydrosoluble choisi parmi des engrais hydrosolubles, des sels pesticides hydrosolubles et des combinaisons de ceux-ci, et ayant une solubilité d'au moins 20% à 25°C dans l'eau dans un récipient,
(ii) à ajouter et mélanger ensuite au moins un polymère épaississant une eau électrolytique choisi parmi la gomme de guar, la gomme de guar hydroxypropylée, la gomme de guar quaternaire, la gomme de guar anionique, la gomme de guar amphotère et des mélanges de ceux-ci dans le récipient jusqu'à ce que le polymère épaississant une eau électrolytique soit complètement hydraté ou jusqu'à ce que la viscosité ait été développée,
(iii) à mélanger ensuite au moins un produit agrochimique solide choisi dans le groupe constitué de la méthyléthylhydroxyéthylcellulose, d'un pesticide insoluble dans l'eau ayant une solubilité inférieure à 2% en poids à 25°C dans l'eau, d'un régulateur de croissance insoluble dans l'eau ayant une solubilité inférieure à 2% en poids à 25°C dans l'eau, d'un oligoélément insoluble dans l'eau ayant une solubilité inférieure à 2% en poids à 25°C dans l'eau, et de combinaisons et de mélanges de ceux-ci dans le récipient jusqu'à l'obtention d'une composition de suspension homogène ; où la composition de suspension présente une propriété de fluidification par cisaillement avec une viscosité inférieure à 30000 mPa*s, telle que mesurée à environ 25°C avec un viscosimètre Brookfield DV-II Pro avec une broche #64 à 60 tr/min, et où la concentration du sel hydrosoluble est comprise entre 15 et 70% en poids, la concentration du polymère épaississant une eau électrolytique est comprise entre 0,1 et 2% en poids, la concentration du produit agrochimique solide est comprise entre 3 et 50% en poids, équilibrées avec de l'eau pour atteindre 100% en poids.

14. Procédé de la revendication 13, dans lequel le sel hydrosoluble est en outre combiné avec un sel pesticide hydrosoluble.

15. Procédé de la revendication 14, dans lequel le sel pesticide soluble est choisi dans le groupe constitué d'un sel de glyphosate, d'un sel de dicamba, d'un sel de 2,4-D et d'un sel de glufosinate, et de combinaisons et de mélanges de ceux-ci.
